# EUROPÄISCHE PATENTSCHRIFT

(11) **EP 3 812 557 B1**
(45) Veröffentlichungstag und Bekanntmachung des Hinweises auf die Patenterteilung: **25.01.2023**
(21) Anmeldenummer: 20197088.6
(22) Anmeldetag: 21.09.2020
(51) Int. Cl.: F01N 3/20, F01N 3/28, F01N 13/00, B01F 23/213, B01F 25/314, B01F 25/432, B01F 25/433

(54) **MISCHER**
MIXER
MÉLANGEUR

(30) Priorität: 22.10.2019 DE 102019128504; 11.11.2019 DE 102019130305
(43) Veröffentlichungstag der Anmeldung: 28.04.2021
(73) Patentinhaber: Purem GmbH, 66539 Neunkirchen (DE)
(72) Erfinder: Uysal, Fatih, 73207 Plochingen (DE); Kurpejovic, Enver, 73230 Kirchheim unter Teck (DE)
(74) Vertreter: Ruttensperger Lachnit Trossin Gomoll

(56) Entgegenhaltungen:
- EP-A1- 2 128 398
- EP-A1- 3 015 669
- DE-A1-102015 108 655
- DE-A1-102017 105 093

## Beschreibung

Die vorliegende Erfindung betrifft einen Mischer für eine Abgasanlage einer Brennkraftmaschine.

Zur Verringerung des Stickoxidanteils in dem aus einer Diesel-Brennkraftmaschine ausgestoßenen Abgas ist es bekannt, in den Abgasstrom ein Reaktionsmittel, beispielsweise eine Harnstoff/Wasser-Lösung, einzuspritzen und mit dem Abgasstrom zu durchmischen. In einer weiter stromabwärts folgenden SCR-Katalysatoranordnung erfolgt dann eine zur Verringerung des Stickoxidanteils führende katalytische Reaktion.

Für eine effiziente Durchführung dieser katalytischen Reaktion ist es erforderlich, dass stromaufwärts bezüglich der SCR-Katalysatoranordnung eine intensive Durchmischung des in das Abgas eingespritzten Reaktionsmittels mit dem Abgas herbeigeführt wird. Zu diesem Zwecke werden Mischer eingesetzt, welche durch verschiedene strömungstechnische Maßnahmen eine Verwirbelung, gegebenenfalls auch eine Verdampfung des Reaktionsmittels, bewirken können.

Aus der DE 10 2017 105 093 A1 ist ein Mischer gemäß dem Oberbegriff des Anspruchs 1 bekannt. Bei diesem bekannten Mischer sind zwischen einer abgeflacht runden, im Wesentlichen elliptischen Außenwandung eines Mischergehäuses und einer darin angeordneten Strömungsteilerwand zwei an beiden Seiten um die Strömungsteilerwand führende Strömungskanäle gebildet, welche zu einem von der Strömungsteilerwand umgebenen weiteren Strömungskanal führen. In der Strömungsteilerwand sind mehrere Durchströmöffnungen gebildet, durch welche hindurch Abgas in den von der Strömungsteilerwand umgebenen Strömungskanal strömen können. Zwischen zwei derartigen Durchströmöffnungen ist in Umfangsrichtung ein Einbuchtungsbereich in der Strömungsteilerwand gebildet.

Die EP 2 128 398 A1 offenbart einen Mischer mit einem Mischergehäuse, welches eine darin ausgebildete rohrartige Strömungsteilerwand mit im Wesentlichen kreisrundem Querschnitt mit einer im Wesentlichen kreisartig geformten Außenwandung umgibt.

Die DE 10 2015 108 655 A1 offenbart einen Mischer, bei welchem eine im Wesentlichen kreisrunde und von einer Außenwandung eines Mischergehäuses umgebene Strömungsteilerwand an einer stromaufwärtigen Seite eine Mehrzahl von Durchströmöffnungen aufweist.

Die EP 3 015 669 A1 umfasst einen Mischer, bei welchem eine rohrartige, im Wesentlichen kreisrunde Strömungsteilerwand in ein rohrartiges, im Wesentlichen kreisrundes Mischergehäuse eingesetzt ist. Über den Umfang der Strömungsteilerwand ist eine Vielzahl von Durchströmöffnungen ausgebildet.

Es ist die Aufgabe der vorliegenden Erfindung, einen Mischer für eine Abgasanlage bereitzustellen, welcher bei baulich einfacher Ausgestaltung für eine gute Durchmischung von Abgas und in dieses eingespritztem Reaktionsmittel sorgt.

Erfindungsgemäß wird diese Aufgabe gelöst durch einen Mischer für eine Abgasanlage einer Brennkraftmaschine gemäß Anspruch 1. Dieser umfasst ein Mischergehäuse mit einer Einströmöffnung und einer Ausströmöffnung, wobei in dem Mischergehäuse auf die Einströmöffnung folgend ein erster Strömungskanal und ein zweiter Strömungskanal zueinander parallel zu einem dritten Strömungskanal führen und in diesen einmünden, wobei der dritte Strömungskanal zur Ausströmöffnung führt, wobei der erste Strömungskanal und der zweite Strömungskanal zwischen einer Außenwandung des Mischergehäuses und einer von der Außenwandung umgebenen Strömungsteilerwand bereitgestellt sind und der dritte Strömungskanal von der Strömungsteilerwand umgeben ist.

Bei dem erfindungsgemäß aufgebauten Mischer wird der von einer Brennkraftmaschine, beispielsweise einer Diesel-Brennkraftmaschine, ausgestoßene Abgasstrom bei bzw. nach Einleitung in den Mischer über die Einströmöffnung in zwei Teilströme aufgeteilt. Die beiden Teilströme strömen im ersten bzw. zweiten Strömungskanal voneinander getrennt und werden bei Einleitung in den dritten Strömungskanal wieder zusammengeführt. Bei dieser Zusammenführung wird eine Verwirbelung erzeugt, die eine effiziente Vermischung von Abgas und Reaktionsmittel bewirkt.

Es ist darauf hinzuweisen, dass mit dem Ausdruck "parallel" zum Ausdruck gebracht ist, dass im Sinne der vorliegenden Erfindung die beiden in dem ersten bzw. zweiten Strömungskanal strömenden Teilströme strömungstechnisch zueinander parallel, grundsätzlich aber voneinander getrennt geführt sind, nicht notwendigerweise aber geometrisch parallel geführt sind.

Um für die beiden Strömungskanäle einen am Bereich der Zusammenführung derselben das Entstehen einer Verwirbelung unterstützenden Verlauf vorsehen zu können, ist das Mischergehäuse mit einem ersten Ausbauchungsbereich der Außenwandung den ersten Strömungskanal nach außen begrenzt und mit einem zweiten Ausbauchungsbereich der Außenwandung den zweiten Strömungskanal nach außen begrenzt.

Eine gerichtete und das Entstehen einer Verwirbelung weiter unterstützende Einleitung der beiden zusammengeführten Teilströme wird dadurch erreicht, dass der erste Ausbauchungsbereich und der zweite Ausbauchungsbereich im Bereich eines Einbuchtungsbereichs aneinander anschließen, wobei der Einbuchtungsbereich einen die Abgasströme aus dem ersten Strömungskanal und dem zweiten Strömungskanal in den dritten Strömungskanal leitenden Strömungsleitbereich bildet.

Für den Eintritt der beiden im Bereich des dritten Strömungskanals wieder zusammengeführten Teilströme in den dritten Strömungskanal münden der erste Strömungskanal und der zweite Strömungskanal im Bereich einer Durchströmöffnung in der Strömungsteilerwand in den dritten Strömungskanal ein.

Dabei ist es für das Entstehen einer Wirbelströmung besonders vorteilhaft, dass die Durchströmöffnung dem Einbuchtungsbereich gegenüberliegt.

Für eine baulich einfach zu realisierende Ausgestaltung kann vorgesehen sein, dass die Außenwandung durch ein erstes Gehäuseelement bereitgestellt ist, wobei die Einströmöffnung am ersten Gehäuseelement ausgebildet ist, und dass die Strömungsteilerwand durch ein wenigstens teilweise in das erste Gehäuseelement eingesetztes zweites Gehäuseelement bereitgestellt ist, wobei die Ausströmöffnung am zweiten Gehäuseelement ausgebildet ist.

Ein einfacher Aufbau kann weiter dadurch unterstützt werden, dass das zweite Gehäuseelement in Richtung einer Ausströmöffnung-Mittenachse der Ausströmöffnung langgestreckt ist, wobei das zweite Gehäuseelement in einem rohrartigen ersten Längenbereich die Ausströmöffnung bereitstellt und mit dem ersten Mischer-Gehäuseelement verbunden ist und in einem zweiten Längenbereich die Strömungsteilerwand bereitstellt.

Um vermittels der Strömungsteilerwand die Verdampfung des Reaktionsmittels unterstützen zu können, wird vorgeschlagen, dass das zweite Gehäuseelement mit einem der Einströmöffnung zugewandten Scheitelbereich der Strömungsteilerwand einen Reaktionsmittel-Aufnahmeflächenbereich bereitstellt. Durch das Einspritzen des Reaktionsmittels auf die Strömungsteilerwand zu wird eine großflächige Benetzung der Strömungsteilerwand und damit eine effiziente Reaktionsmittelverdampfung unterstützt

Um beim Strömen zwischen der Einströmöffnung und der Ausströmöffnung zusätzlich zu der erfindungsgemäß erzeugten Verwirbelung eine weitere Strömungsumlenkung zu erzwingen, wird vorgeschlagen, dass eine Einströmöffnung-Mittenachse der Einströmöffnung und eine Ausströmöffnung-Mittenachse der Ausströmöffnung zueinander nicht parallel und nicht koaxial angeordneten sind. Insbesondere kann dabei vorgesehen sein, dass die Einströmöffnung-Mittenachse und die Ausströmöffnung-Mittenachse einander schneiden oder/und zueinander unter einem Winkel im Bereich von 80° bis 100°, vorzugsweise etwa 90°, angeordneten sind.

Bei einer für eine effiziente Durchmischung vorteilhaften, einen vergleichsweise geringen Strömungswiderstand einführenden Ausgestaltung können der erste Strömungskanal und der zweite Strömungskanal bezüglich einer durch eine Einströmöffnung-Mittenachse der Einströmöffnung und eine Ausströmöffnung-Mittenachse der Ausströmöffnung aufgespannten Mittenebene im Wesentlichen spiegelsymmetrisch ausgebildet sein.

Dies kann beispielsweise dadurch realisiert werden, dass das erste Mischer-Gehäuseelement und das zweite Gehäuseelement bezüglich der durch die Einströmöffnung-Mittenachse und die Ausströmöffnung-Mittenachse aufgespannten Mittenebene im Wesentlichen spiegelsymmetrisch ausgebildet sind.

Beispielsweise kann die Außenwandung mit dem ersten Ausbauchungsbereich, dem zweiten Ausbauchungsbereich und dem Einbuchtungsbereich eine herzförmige Umfangskontur des Mischergehäuses bereitstellen.

Für eine bauliche Verknüpfung des erfindungsgemäß aufgebauten Mischers mit einem zum Einspritzen des Reaktionsmittels vorzusehenden Injektor wird vorgeschlagen, dass im Bereich der Einströmöffnung eine Injektor-Montageformation vorgesehen ist. Ferner kann zur Ermittlung von für den Betrieb einer Abgasanlage relevanten Informationen, wie zum Beispiel der Abgastemperatur, dem Sauerstoffgehalt im Abgas oder dem Stickoxidanteil im Abgas, im Bereich der Einströmöffnung eine Sensor-Montageformation vorgesehen sein.

Um die Wechselwirkung des Mischers mit dem dieses durchströmenden Abgas bzw. dem in den Abgasstrom eingespritzten Reaktionsmittel zu verbessern, wird vorgeschlagen, dass an der Strömungsteilerwand wenigstens ein vor dem oder in den ersten Strömungskanal hervorstehendes Oberflächenvergrößerungselement oder/und wenigstens ein vor dem oder in den zweiten Strömungskanal hervorstehendes Oberflächenvergrößerungselement vorgesehen ist. Vorzugsweise sind in Zuordnung zu wenigstens einem der beiden Strömungskanäle mehrere derartige, beispielsweise in der Strömungsrichtung im jeweiligen Strömungskanal oder/und stromaufwärts davon aufeinanderfolgend angeordnete Oberflächenvergrößerungselemente vorgesehen. Diese verstärken einerseits die Verwirbelung des Abgasstroms, stellen andererseits eine vergrößerte Oberfläche der Strömungsteilerwand bereit, auf welche das in flüssiger Form eingespritzte Reaktionsmittel auftreffen kann, um von dieser Oberfläche dann verdampft zu werden.

Alternativ oder zusätzlich kann zur Vergrößerung der Oberfläche bzw. auch zur verstärkten Erzeugung einer Verwirbelung des Abgasstroms die Strömungsteilerwand wenigstens bereichsweise wellenartig ausgebildet sein.

Die Erfindung betrifft ferner eine Abgasanlage für eine Brennkraftmaschine, umfassend einen erfindungsgemäß aufgebauten Mischer sowie einen an dem Mischergehäuse oder stromaufwärts des Mischergehäuses getragenen Injektor.

Für eine effiziente Verdampfung des eingespritzten Reaktionsmittels wird vorgeschlagen, dass der Injektor an dem Mischergehäuse oder stromaufwärts des Mischergehäuses derart getragen ist, dass ein von diesem abgegebener Reaktionsmittelstrahl auf einen Reaktionsmittel-Aufnahmeflächenbereich der Strömungsteilerwand gerichtet ist.

Die vorliegende Erfindung wird nachfolgend mit Bezug auf die beiliegenden Figuren detailliert beschrieben. Es zeigt:
- Fig. 1: eine perspektivische Ansicht eines Mischers für eine Abgasanlage einer Brennkraftmaschine;
- Fig. 2: eine Seitenansicht des Mischers in Blickrichtung II in Fig. 1;
- Fig. 3: eine Schnittansicht des Mischers der Fig. 2, geschnitten längs einer Linie III-III in Fig. 2;
- Fig. 4: ein eine Strömungsteilerwand und eine Ausströmöffnung bereitstellendes Gehäuseelement des Mischers der Fig. 1;
- Fig. 5: eine Draufsicht auf das Gehäuseelement der Fig. 4 in Blickrichtung V in Fig. 4;
- Fig. 6: eine der Fig. 5 entsprechende Draufsicht auf das Gehäuseelement der Fig. 4 mit alternativen Ausgestaltungen dieses Gehäuseelements.

In den Figuren ist ein Mischer für eine allgemein mit 11 bezeichnete Abgasanlage einer Brennkraftmaschine mit 10 bezeichnet. Der Mischer 10 umfasst ein gehäuseartiges erstes Gehäuseelement 12 und ein rohrartiges zweites Gehäuseelement 14. Jedes der beiden Gehäuseelemente ist vorzugsweise aus Blechmaterial aufgebaut.

Das erste Gehäuseelement 12 ist mit einer als Umfangswandung ausgebildeten Außenwandung 16, einer an die Außenwandung 16 anschließenden oberen Endwandung 18 und einer am anderen Ende an die Außenwandung 16 anschließenden unteren Endwandung 20 ausgebildet. Beispielsweise können die Außenwandung 16 und die beiden Endwandungen 18 durch jeweils separat als Blechumformteile bereitgestellte und durch Verschweißung miteinander verbundene Bauteile bereitgestellt sein. Ein Einströmrohr 22 kann an die Außenwandung 16 bzw. die beiden Endwandungen 18, 20 beispielsweise durch Verschweißung angebunden sein und kann beispielsweise zusammen mit diesen eine Einströmöffung 24 bereitstellen. Diese Einströmöffnung 24 führt durch das Einströmelement 22 entlang einer Einströmöffnung-Längsachse L_{E} in einen in dem ersten Gehäuseelement 14 gebildeten Innenraum 26.

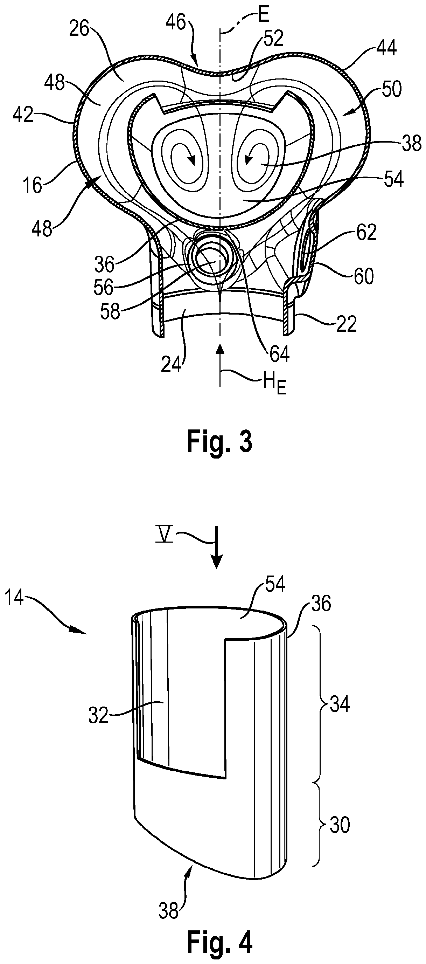

An der unteren Endwandung 20 kann beispielsweise ein im Wesentlichen zylindrischer Ansatz 28 vorgesehen sein, durch welchen hindurch das zweite Gehäuseelement 14 in das erste Gehäuseelement 12 eingeführt ist und an welchem das zweite Gehäuseelement 14 beispielsweise durch Verschweißung festgelegt sein kann. Wie in Fig. 4 zu erkennen, ist das zweite Gehäuseelement 14 mit einem im Wesentlichen rohrartigen ersten Längenbereich 30 und einem daran anschließenden und eine Durchströmöffnung 32 bereitstellenden zweiten Längenbereich 34 ausgebildet. Mit dem im Wesentlichen im Innenraum 26 sich erstreckenden zweiten Längenbereich 34 bildet das zweite Gehäuseelement 14 eine Strömungsteilerwand 26. Im Bereich des ersten Längenbereichs 30 stellt das zweite Gehäuseelement 14 eine Ausströmöffnung 38 bereit, durch welche hindurch in Richtung einer Austrittsöffnung-Mittenachse L_{A} das den Mischer 10 verlassende Gemisch aus Reaktionsmittel und Abgas zu einem in Strömungsrichtung dann folgenden Systembereich einer Abgasanlage, beispielsweise einem SCR-Katalysator, strömen kann.

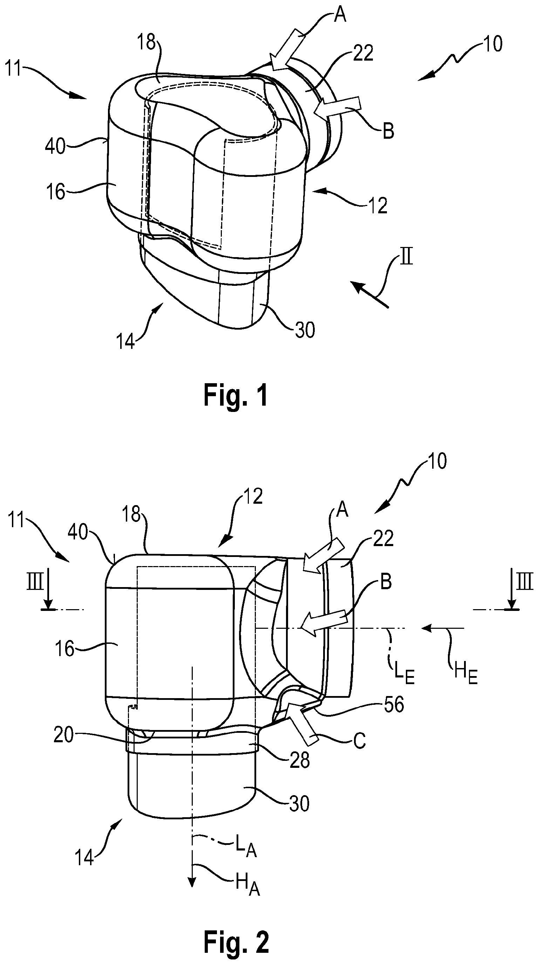

In dem im Wesentlichen durch die beiden Gehäuseelemente 12, 14 bereitgestellten Mischergehäuse 40 sind die Einströmöffnung 24 und die Ausströmöffnung 38 so angeordnet bzw. orientiert, dass deren jeweilige Mittenachsen L_{E} und L_{A} in einer gemeinsamen Ebene E liegen bzw. diese Ebene E aufspannen und zueinander nicht parallel bzw. koaxial liegen. Wie die Fig. 2 dies veranschaulicht, können die beiden Mittenachsen L_{E} und L_{A} beispielsweise unter einen Winkel von näherungsweise 90°, also orthogonal zueinander angeordnet sein.

Die Einströmöffnung-Mittenachse L_{E} und die Ausströmöffnung-Mittenachse L_{A} können dann, wenn die Einströmöffnung 24 bzw. die Ausströmöffnung 38 im Bereich zylindrischer Abschnitte des Mischergehäuses 40 vorgesehen sind, beispielsweise im Wesentlichen den Zylinderachsen dieser Abschnitte entsprechen. Sind die Einströmöffnung 24 bzw. die Ausströmöffnung 38 nicht im Bereich zylindrischer Abschnitte des Mischergehäuses 40 vorgesehen, können die Einströmöffnung-Mittenachse L_{E} und die Ausströmöffnung-Mittenachse L_{A} näherungsweise als den geometrischen Mittenbereich dieser Öffnungen repräsentierende, nicht notwendigerweise geradlinig sich erstreckende Mittenlinien betrachtet werden.

Das erste Gehäuseelement 12 weist in dem in Fig. 3 dargestellten Querschnitt durch die Außenwandung 16 eine näherungsweise herzartige Formgebung auf. Dazu weist das Mischergehäuse 40 insbesondere im Bereich der Außenwandung 16 einen ersten Ausbauchungsbereich 42 und spiegelsymmetrisch bezüglich der Ebene E dazu einen zweiten Ausbauchungsbereich 44 auf. An dem der Einströmöffnung 24 gegenüberliegenden Bereich der Außenwandung 16 gehen diese beiden Ausbauchungsbereiche 42, 44 im Bereich eines Einbuchtungsbereichs 46 ineinander über. Angepasst an diese Formgebung der Außenwandung 16 weisen auch die beiden Endwandungen 18, 20 eine näherungsweise herzförmige Außenumfangskontur auf.

Bei Betrachtung des Mischergehäuses 40 von außen stellen somit die Ausbauchungsbereiche 42, 44 konvexe Strukturen des Mischergehäuses 40 dar, während der Einbuchtungsbereich 46 eine konkave Struktur des Mischergehäuses 40 ist.

Im Innenraum 26 ist die Einströmöffnung 24 im ersten Gehäuseelement 12 durch die durch den zweiten Längenbereich 34 des zweiten Gehäuseelements 14 bereitgestellte Strömungsteilerwand 36 überdeckt. Der in Richtung einer Haupt-Eintrittsrichtung H_{E} über die Einströmöffnung 24 in den Innenraum 26 einströmende Abgasstrom trifft auf die Strömungsteilerwand 36 und wird durch diese bezüglich der Ebene E zu beiden Seiten im Wesentlichen gleichförmig abgeleitet. Hierzu ist es vorteilhaft, wenn auch das zweite Gehäuseelement 14 bezüglich der Ebene E im Wesentlichen spiegelsymmetrisch ausgebildet ist.

In Verbindung mit dem ersten Ausbauchungsbereich 42 begrenzt das zweite Gehäuseelement 14 mit seiner Strömungsteilerwand 36 einen ersten Strömungskanal 48, welcher von der Einströmöffnung 24 ringartig in Richtung zum Einbuchtungsbereich 46 führt. An der anderen Seite der Ebene E begrenzt die Strömungsteilerwand 36 zusammen mit dem zweiten Ausbauchungsbereich 44 einen zweiten Strömungskanal 50, welcher von der Einströmöffnung 24 zum Einbuchtungsbereich 46 führt. Auch die beiden Strömungskanäle 48, 50 sind insbesondere aufgrund der Formgebung der beiden Gehäuseteile 12, 14 bezüglich der Ebene E im Wesentlichen spiegelsymmetrisch, so dass in den beiden Strömungskanälen 48, 50 näherungsweise gleiche Teilströme des über die Einströmöffnung 24 in den Innenraum 26 eingeleiteten Abgasstroms strömen.

Die im zweiten Gehäuseelement 14 bereitgestellte Durchströmöffnung 32 ist so positioniert, dass sie dem Einbuchtungsbereich 46 gegenüberliegt. Der Einbuchtungsbereich 46 stellt einen Strömungsleitbereich 42 bereit, welcher, wie durch Strömungslinien angedeutet, die in den beiden Strömungskanälen 48, 50 strömenden Teilströme in einen im Inneren des zweiten Gehäuseteils 14 gebildeten dritten Strömungskanal 54 einleitet. Da die beiden Teilströme von beiden Seiten her näherungsweise gleichmäßig vermittels des Strömungsleitbereichs 52 durch die Durchströmöffnung 32 hindurch in den dritten Strömungskanal 54 gelenkt werden, entstehen zwei zueinander näherungsweise symmetrische bzw. spiegelsymmetrische Drallströmungen in den beidseits der Ebene E gebildeten Hälften des dritten Strömungskanals 54. Die beiden so ausgebildeten Drallströmungen führen das in den dritten Strömungskanal 54 eingeleitete Abgas dann weiter in Richtung der Ausströmöffnung-Mittenachse A durch den ersten Längenbereich 30 des zweiten Gehäuseelements 14 hindurch, wobei auch der erste Längenbereich 30 einen Teil des dritten Strömungskanals 54 bereitstellen kann.

Im Bereich der Einströmöffnung 24 ist am ersten Gehäuseelement 12 eine in den Fig. 2 und 3 erkennbare Injektor-Montageformation 56 vorgesehen. Diese Injektor-Montageformation 56 kann eine im ersten Gehäuseelement 12 bereitgestellte Öffnung 58 umfassen, durch welche hindurch ein an einer Außenseite des ersten Gehäuseelements 12 beispielsweise in einem Bereich eines dort vorzusehenden Montagestutzens angeordneter Injektor das Reaktionsmittel in den Abgasstrom einleiten kann.

Die Fig. 2 veranschaulicht mit den Pfeilen A, B und C drei mögliche Positionierungen einer derartigen Injektor-Montageformation 56 bzw. eines durch diese Pfeile A, B, C auch angedeuteten Injektors. In jedem dieser Bereiche kann die in Zuordnung zum Pfeil C zeichnerisch dargestellte Injektor-Montageformation 56 vorgesehen sein, wobei beispielsweise die durch den Pfeil A indizierte Position einer Position des Injektors entspricht, in welcher dieser im Bereich der oberen Endwandung 18 und somit von der Ausströmöffnung 38 maximal entfernt positioniert ist. Die dem Pfeil B entsprechende Positionierung der Injektor-Montageformation 56 entspricht näherungswiese einer zwischen den beiden Endwandungen 18, 20 mittigen Positionierung an einer Seite bezüglich der Einströmöffnung 24, während die in den Fig. 2 und 3 dargestellte und durch den Pfeil C indizierte Positionierung eine Positionierung der Injektor-Montageformation 56 in der bzw. nahe der Endwandung 20 und somit auch nahe der Ausströmöffnung 38 indiziert. Obgleich jede dieser Positionierungen für die Injektor-Montageformation 56 möglich ist, sind die durch die Pfeile A und B dargestellten Positionierungen aufgrund des damit erzielbaren besonders effizienten Durchmischungseffekts bevorzugt.

Die Fig. 3 zeigt ferner, dass am ersten Gehäuseelement 12 eine Sensor-Montageformation 60 vorgesehen sein kann. Auch diese kann eine Öffnung 62 umfassen, durch welche hindurch ein beispielsweise an einem in diesem Bereich am ersten Gehäuseelement 12 festgelegten Stutzen getragener Sensor in den Innenraum 26 engreifen oder in Wechselwirkung mit diesem positioniert werden kann. Ein derartiger Sensor kann beispielsweise ein Temperatursensor, ein Stickoxidsensor oder eine Lambdasonde sein, also ein Sensor, welcher Informationen liefert, die für den Betrieb einer Abgasanlage relevant sind und beispielsweise für die Ansteuerung des Injektors oder auch den Verbrennungsbetrieb in einer Brennkraftmaschine genutzt werden können.

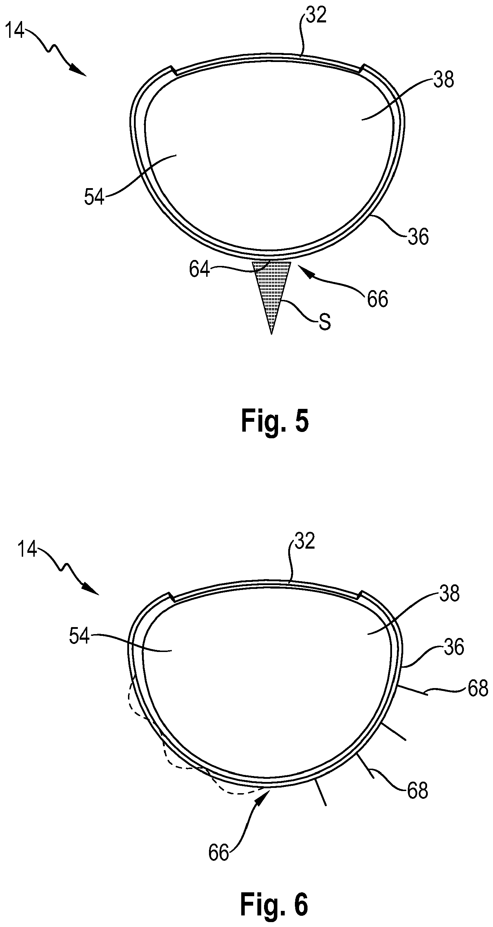

Die Fig. 5 veranschaulicht ferner, dass beispielsweise bei Positionierung eines Injektors in der vorangehend beschriebenen bzw. in den Figuren 1 und 2 veranschaulichten Art und Weise der von dem Injektor im Allgemeinen in Form eines Sprühkegels S abgegebene Reaktionsmittelstrahl auf einen der Einströmöffnung 24 zugewandt liegenden Scheitelbereich 64 der Strömungsteilerwand 36 zu gerichtet ist.

Dieser Scheitelbereich 64 der in Richtung stromaufwärts, also in Richtung zur Einströmöffnung 24 konvex gewölbten Strömungsteilerwand 36 stellt somit einen Reaktionsmittel-Aufnahmeflächenbereich 66 bereit, auf welchen der Reaktionsmittelstrahl bzw. der Sprühkegel S auftrifft. Damit kann gewährleistet werden, dass nahezu das gesamte vom Injektor eingespritzte Reaktionsmittel die Oberfläche der Strömungsteilerwand 36 benetzt und in den beiden Strömungskanälen 48, 50 entlang der Strömungsteilerwand 36 getragen wird und dabei von der Strömungsteilerwand 36 abgedampft wird und somit in den Abgasstrom im jeweiligen Strömungskanal 48, 50 gelangt.

Das stromaufwärts der beiden Strömungskanäle 48, 50, also im Bereich der Einströmöffnung 24 und vor Aufteilung der beiden Teilströme auf den Scheitelbereich 64 zu eingespritzte Reaktionsmittel wird somit durch diese beiden Teilströme durch die beiden Strömungskanäle 48, 50 hindurch getragen und gelangt mit den beiden Teilströmen in Form der beiden in Fig. 3 angedeuteten Drallströmungen in den dritten Strömungskanal 54. Durch diese Drallströmungen entsteht eine derartige Verwirbelung, dass eine effiziente Durchmischung des verdampften bzw. zum Teil in Tröpfchenform mitgetragenen Reaktionsmittels mit dem Abgas auftritt. Das so erzeugte Gemisch aus Reaktionsmittel und Abgas strömt dann durch den dritten Strömungskanal 54 bzw. das zweite Gehäuseelement 14 und die darin gebildete Ausströmöffnung 38 aus dem Mischer 10 in Richtung einer Haupt-Ausströmrichtung H_{A} in Form der dann sich allmählich auch vermischenden Drallströmungen aus.

Die Fig. 6 zeigt Alternativen der baulichen Ausgestaltung des die Strömungsteilerwand 36 bereitstellenden zweiten Gehäuseelements 14. So zeigt die linke Hälfte der Fig. 6 durch Strichlinie eingezeichnet, dass die Strömungsteilerwand 36, beispielsweise ausgehend vom Scheitelbereich 66, entlang ihrer einen jeweiligen Strömungskanal 48 bzw. 50 begrenzenden Bereiche oder/und stromaufwärts davon wellenartig ausgebildet sein kann. Eine derartige wellenartiges Struktur führt zu einer Vergrößerung der Oberfläche der Strömungsteilerwand 36 und unterstützt somit die Abdampfung des diese Oberfläche benetzenden Reaktionsmittels. Andererseits unterstützt die in Strömungsrichtung eines jeweiligen Strömungskanals 48 bzw. 50 fortschreitende Wellenstruktur bereits in den Strömungskanälen 48, 50 die Entstehung von Verwirbelungen und somit die Vermischung von Reaktionsmittel und Abgas.

In der rechten Hälfte der Fig. 6 ist eine Ausgestaltung veranschaulicht, bei welcher von der Strömungsteilerwand 36 abstehend, in Strömungsrichtung aufeinanderfolgend mehrere Oberflächenvergrößerungselemente 68 vorgesehen sind. Diese können beispielsweise so angeordnet sein, dass sie von der einem jeweiligen Strömungskanal 48 bzw. 50 zugewandten Seite der Strömungsteilerwand 36 näherungsweise orthogonal hervorstehen und in Richtung der Ausströmöffnung-Mittenachse L_{A} im Wesentlichen den gesamten Erstreckungsbereich der Strömungskanäle 48, 50 erfassen. Auch diese Oberflächenvergrößerungselemente 68 unterstützen die Verwirbelung des Abgasstroms in einem jeweiligen Strömungskanal 48, 50 bzw., abhängig von der Positionierung, bereits stromaufwärts eines jeweiligen Strömungskanals 48, 50 und vergrößern die zur Benetzung mit Reaktionsmittel und somit zur Reaktionsmittelverdampfung zur Verfügung stehende Oberfläche des zweiten Gehäuseelements 14.

Es ist darauf hinzuweisen, dass die beiden in Fig. 6 dargestellten Alternativen in Kombination miteinander vorgesehen sein können, und dass die Oberflächenvergrößerungselemente von der dargestellten Erstreckungsrichtung abweichende Positionierungen aufweisen können, beispielsweise in oder entgegen zur Strömungsrichtung angestellt sein können. Bei Ausgestaltung der Strömungsteilerwand mit wellenartiger Struktur kann diese Struktur beispielsweise im Wesentlichen die Form einer Sinuswelle aufweisen. Auch andere Wellenformen, wie zum Beispiel eine Sägezahn-Wellenform oder eine Dreieck-Wellenform, können realisiert werden.

Die vorliegende Erfindung stellt ein baulich einfach zu realisierendes Konzept eines Mischers bereit, welches bei Einsatz einer geringen Anzahl an einfach zu formenden Bauteilen eine effiziente Durchmischung von Abgas und Reaktionsmittel bewirken kann.

Es sei abschließend darauf hingewiesen, dass selbstverständlich bei dem erfindungsgemäß aufgebauten Mischer bauliche Änderungen vorgenommen werden können, ohne vom Grundkonzept der vorliegenden Erfindung, nämlich dem Aufteilen in zwei dann zum Erzeugen jeweiliger Drallströmungen zusammenzuführende Teilströmungen, abzuweichen. So kann beispielsweise, wie dies die Fig. 3 im Zusammenhang mit der dort gezeigten Injektor-Montageformation 56 andeutet, von einer exakt symmetrischen Ausgestaltung bezüglich der durch die beiden Öffnungsmittenachsen aufgespannten Ebene E abgewichen werden. Dies kann sowohl die Ausgestaltung bzw. Positionierung der Injektor-Montageformation als auch die Ausgestaltung des ersten bzw. zweiten Strömungskanals betreffen. Durch eine derartige von einer exakt symmetrischen Ausgestaltung abweichende Formgebung wird es möglich, eine ungleichmäßige Anströmung der Strömungsteilerwand 36 zu kompensieren. Der Injektor könnte bei einer weiteren alternativen Ausgestaltungsart auch stromaufwärts bezüglich des Mischergehäuses beispielsweise an einem zu dem Mischergehäuse führenden Abgasrohr angeordnet sein.

## Patentansprüche

1. Mischer für eine Abgasanlage einer Brennkraftmaschine, umfassend ein Mischergehäuse (40) mit einer Einströmöffnung (24) und einer Ausströmöffnung (38), wobei in dem Mischergehäuse (40) auf die Einströmöffnung (24) folgend ein erster Strömungskanal (48) und ein zweiter Strömungskanal (50) zueinander parallel zu einem dritten Strömungskanal (54) führen und in diesen einmünden, wobei der dritte Strömungskanal (54) zur Ausströmöffnung (38) führt, wobei der erste Strömungskanal (48) und der zweite Strömungskanal (50) zwischen einer Außenwandung (16) des Mischergehäuses (40) und einer von der Außenwandung (16) umgebenen Strömungsteilerwand (36) bereitgestellt sind und der dritte Strömungskanal (54) von der Strömungsteilerwand (36) umgeben ist, wobei der erste Strömungskanal (48) und der zweite Strömungskanal (50) im Bereich einer Durchströmöffnung (32) in der Strömungsteilerwand (36) in den dritten Strömungskanal (54) einmünden, wobei das Mischergehäuse (40) mit einem ersten Ausbauchungsbereich (42) der Außenwandung (16) den ersten Strömungskanal (48) nach außen begrenzt und mit einem zweiten Ausbauchungsbereich (44) der Außenwandung (16) den zweiten Strömungskanal (50) nach außen begrenzt,
**dadurch gekennzeichnet, dass** der erste Ausbauchungsbereich (42) und der zweite Ausbauchungsbereich (44) im Bereich eines Einbuchtungsbereichs (46) aneinander anschließen, wobei der Einbuchtungsbereich (46) einen die Abgasströme aus dem ersten Strömungskanal (48) und dem zweiten Strömungskanal (50) in den dritten Strömungskanal (54) leitenden Strömungsleitbereich (52) bildet, und dass die Durchströmöffnung (32) dem Einbuchtungsbereich (46) gegenüberliegt.

2. Mischer nach Anspruch 1, **dadurch gekennzeichnet, dass** die Außenwandung (10) durch ein erstes Gehäuseelement (12) bereitgestellt ist, wobei die Einströmöffnung (24) am ersten Gehäuseelement (12) ausgebildet ist, und dass die Strömungsteilerwand (36) durch ein wenigstens teilweise in das erste Gehäuseelement (12) eingesetztes zweites Gehäuseelement (14) bereitgestellt ist, wobei die Ausströmöffnung (38) am zweiten Gehäuseelement (14) ausgebildet ist.

3. Mischer nach Anspruch 2, **dadurch gekennzeichnet, dass** das zweite Gehäuseelement (14) in Richtung einer Ausströmöffnung-Mittenachse (L_{A}) der Ausströmöffnung (38) langgestreckt ist, wobei das zweite Gehäuseelement (14) in einem rohrartigen ersten Längenbereich (30) die Ausströmöffnung (38) bereitstellt und mit dem ersten Mischer-Gehäuseelement (12) verbunden ist und in einem zweiten Längenbereich (34) die Strömungsteilerwand (36) bereitstellt oder/und dass das zweite Gehäuseelement mit einem der Einströmöffnung (24) zugewandten Scheitelbereich (64) der Strömungsteilerwand (36) einen Reaktionsmittel-Aufnahmeflächenbereich (66) bereitstellt.

4. Mischer nach einem der vorangehenden Ansprüche, **dadurch gekennzeichnet, dass** eine Einströmöffnung-Mittenachse (L_{E}) der Einströmöffnung (24) und eine Ausströmöffnung-Mittenachse (L_{A}) der Ausströmöffnung (38) zueinander nicht parallel und nicht koaxial angeordneten sind.

5. Mischer nach Anspruch 4, **dadurch gekennzeichnet, dass**, die Einströmöffnung-Mittenachse (L_{E}) und die Ausströmöffnung-Mittenachse (L_{A}) der Ausströmöffnung (38) einander schneiden oder/und zueinander unter einem Winkel im Bereich von 80° bis 100°, vorzugsweise etwa 90°, angeordneten sind.

6. Mischer nach einem der vorangehenden Ansprüche, **dadurch gekennzeichnet, dass** der erste Strömungskanal (48) und der zweite Strömungskanal (50) bezüglich einer durch eine Einströmöffnung-Mittenachse (L_{E}) der Einströmöffnung (24) und eine Ausströmöffnung-Mittenachse (L_{A}) der Ausströmöffnung (38) aufgespannten Mittenebene (E) im Wesentlichen spiegelsymmetrisch ausgebildet sind.

7. Mischer nach Anspruch 6, **dadurch gekennzeichnet, dass** das erste Gehäuseelement (12) und das zweite Gehäuseelement (14) bezüglich der durch die Einströmöffnung-Mittenachse (L_{E}) und die Ausströmöffnung-Mittenachse (L_{A}) aufgespannten Mittenebene (E) im Wesentlichen spiegelsymmetrisch ausgebildet sind.

8. Mischer nach einem der vorangehenden Ansprüche, **dadurch gekennzeichnet, dass** die Außenwandung (16) mit dem ersten Ausbauchungsbereich (42), dem zweiten Ausbauchungsbereich (44) und dem Einbuchtungsbereich (46) eine herzförmige Umfangskontur des Mischergehäuses (40) bereitstellt.

9. Mischer nach einem der vorangehenden Ansprüche, **dadurch gekennzeichnet, dass** im Bereich der Einströmöffnung (24) eine Injektor-Montageformation (56) vorgesehen ist, oder/und dass im Bereich der Einströmöffnung (24) eine Sensor-Montageformation (60) vorgesehen ist.

10. Mischer nach einem der vorangehenden Ansprüche, **dadurch gekennzeichnet, dass** an der Strömungsteilerwand (36) wenigstens ein vor dem oder in den ersten Strömungskanal (48) hervorstehendes Oberflächenvergrößerungselement (64) oder/und wenigstens ein vor dem in den zweiten Strömungskanal (50) hervorstehendes Oberflächenvergrößerungselement (68) vorgesehen ist.

11. Mischer nach einem der vorangehenden Ansprüche, dass die Strömungsteilerwand (36) wenigstens bereichsweise wellenartig ausgebildet ist.

12. Abgasanlage für eine Brennkraftmaschine, umfassend einen Mischer (10) nach einem der vorangehenden Ansprüche sowie einen an dem Mischergehäuse (40) oder stromaufwärts des Mischergehäuses (40) getragenen Injektor (A, B, C).

13. Abgasanlage nach Anspruch 12, **dadurch gekennzeichnet, dass**, der Injektor (A, B, C) an dem Mischergehäuse (40) oder stromaufwärts des Mischergehäuses (40) derart getragen ist, dass ein von diesem abgegebener Reaktionsmittelstrahl auf einen Reaktionsmittel-Aufnahmeflächenbereich (66) der Strömungsteilerwand (36) gerichtet ist.

## Claims

1. Mixer for an exhaust system of an internal combustion engine, comprising a mixer housing (40) with an inflow opening (24) and with an outflow opening (38), wherein a first flow duct (48) following the inflow opening (24) in the mixer housing (40) and a second flow duct (50) lead parallel to one another to a third flow duct (54) and open into the latter, wherein the third flow duct (54) leads to the outflow opening (38), wherein the first flow duct (48) and the second flow duct (50) are provided between an outer wall (16) of the mixer housing (40) and a flow divider wall (36) enclosed by the outer wall (16), and the third flow duct (54) is enclosed by the flow divider wall (36),
wherein the first flow duct (48) and the second flow duct (50) open into the third flow duct (54) in the area of a flow opening (32) in the flow divider wall (36), wherein the mixer housing (40) defines outwardly the first flow duct (48) with a first bulge area (42) of the outer wall (16) and it defines outwardly the second flow duct (50) with a second bulge area (44) of the outer wall (16),
**characterized in that** the first bulge area (42) and the second bulge area (44) adjoin one another in the area of an indentation area (46), wherein the indentation area (46) forms a flow deflection area (52) deflecting the exhaust gas flows from the first flow duct (48) and from the second flow duct (50) into the third flow duct (54), and **in that** the flow opening (32) is located opposite the indentation area (46).

2. Mixer according to claim 1, **characterized in that** the outer wall (10) is formed by a first housing element (12), wherein the inflow opening (24) is formed at the first housing element (12), and **in that** the flow divider wall (36) is formed by a second housing element (14) which is at least partially inserted into the first housing element (12), wherein the outflow opening (38) is formed at the second housing element (14).

3. Mixer according to claim 2, **characterized in that** the second housing element (14) is elongated in the direction of an outflow opening central axis (L_{A}) of the outflow opening (38), wherein the second housing element (14) forms the outflow opening (38) in a tubular first longitudinal area (30) and is connected to the first mixer housing element (12) and forms the flow divider wall (36) in a second length area (34) or/and **in that** the second housing element forms a reactant receiving surface area (66) with an apex area (64) of the flow divider wall (36) facing the inflow opening (24).

4. Mixer according to one of the preceding claims, **characterized in that** an inflow opening central axis (L_{E}) of the inflow opening (24) and an outflow opening central axis (L_{A}) of the outflow opening (38) are arranged non-parallel and non-coaxial to each other.

5. Mixer according to claim 4, **characterized in that** the inflow opening central axis (L_{E}) and the outflow opening central axis (L_{A}) of the outflow opening (38) intersect each other and/or are arranged at an angle in the range of 80° to 100°, preferably about 90°, to one another.

6. Mixer according to one of the preceding claims, **characterized in that** the first flow duct (48) and the second flow duct (50) are designed to be essentially mirror-symmetrical with respect to a central plane (E) spanned by an inflow opening central axis (L_{E}) of the inflow opening (24) and an outflow opening central axis (L_{A}) of the outflow opening (38).

7. Mixer according to claim 6, **characterized in that** the first housing element (12) and the second housing element (14) are formed substantially mirror-symmetrically with respect to the central plane (E) spanned by the inflow opening central axis (L_{E}) and the outflow opening central axis (L_{A}).

8. Mixer according to one of the preceding claims, **characterized in that** the outer wall (16) with the first bulge area (42), the second bulge area (44) and the indentation area (46) provides a heart-shaped circumferential contour of the mixer housing (40).

9. Mixer according to one of the preceding claims, **characterized in that** an injector mounting formation (56) is provided in the area of the inflow opening (24), and/or in that a sensor mounting formation (60) is provided in the area of the inflow opening (24).

10. Mixer according to one of the preceding claims, **characterized in that** at least one surface enlargement element (64) protruding in front of or into the first flow duct (48) and/or at least one surface enlargement element (68) protruding in front of or into the second flow duct (50) is provided at the flow divider wall (36).

11. Mixer according to one of the preceding claims, **characterized in that** the flow divider wall (36) has a wave-shaped configuration in at least some areas.

12. Exhaust system for an internal combustion engine, comprising a mixer (10) according to one of the preceding claims as well as an injector (A, B, C) carried at the mixer housing (40) or upstream of the mixer housing (40).

13. Exhaust system according to claim 12, **characterized in that** the injector (A, B, C) is carried at the mixer housing (40) or upstream of the mixer housing (40) such that a reactant stream released therefrom is directed towards a reactant receiving surface area (66) of the flow divider wall (36).

## Revendications

1. Mélangeur pour un système d'échappement d'un moteur à combustion interne, comprenant un boîtier de mélangeur (40) avec une ouverture d'entrée (24) et une ouverture de sortie (38), dans lequel dans le boîtier de mélangeur (40) suivant l'ouverture d'entrée (24) un premier canal d'écoulement (48) et un deuxième canal d'écoulement (50) mènent l'un à l'autre parallèlement à un troisième canal d'écoulement (54) et débouchent dans celui-ci, dans lequel le troisième canal d'écoulement (54) mène à l'ouverture de sortie (38), dans lequel le premier canal d'écoulement (48) et le deuxième canal d'écoulement (50) sont prévus entre une paroi extérieure (16) du boîtier de mélangeur (40) et une paroi de séparation d'écoulement (36) entourée par la paroi extérieure (16), et le troisième canal d'écoulement (54) étant entouré par la paroi de séparation d'écoulement (36), dans lequel le premier canal d'écoulement (48) et le deuxième canal d'écoulement (50) débouchent dans le troisième canal d'écoulement (54) dans la zone d'une ouverture de passage (32) dans la paroi de séparation d'écoulement (36), dans lequel le boîtier de mélangeur (40) définit le premier canal d'écoulement (48) vers l'extérieur par une première zone de renflement (42) de la paroi extérieure (16) et définit le deuxième canal d'écoulement (50) vers l'extérieur par une deuxième zone de renflement (44) de la paroi extérieure (16),
**caractérisé en ce que** la première zone de renflement (42) et la deuxième zone de renflement (44) se raccordent l'une à l'autre dans une zone de renfoncement (46), la zone de renfoncement (46) formant une zone de guidage d'écoulement (52) guidant les flux de gaz d'échappement du premier canal d'écoulement (48) et du deuxième canal d'écoulement (50) dans le troisième canal d'écoulement (54), et **en ce que** l'ouverture de passage (32) est opposée à la zone de renfoncement (46).

2. Mélangeur selon la revendication 1, **caractérisé en ce que** la paroi extérieure (10) est fournie par un premier élément de boîtier (12), dans lequel l'ouverture d'entrée (24) est formée sur le premier élément de boîtier (12), et **en ce que** la paroi de séparation d'écoulement (36) est fournie par un deuxième élément de boîtier (14) inséré au moins partiellement dans le premier élément de boîtier (12), dans lequel l'ouverture de sortie (38) est formée sur le deuxième élément de boîtier (14).

3. Mélangeur selon la revendication 2, **caractérisé en ce que** le deuxième élément de boîtier (14) est allongé dans la direction d'un axe central d'ouverture de sortie (L_{A}) de l'ouverture de sortie (38), dans lequel le deuxième élément de boîtier (14) fournit l'ouverture de sortie (38) dans une première zone longitudinale tubulaire (30) et est relié au premier élément de boîtier de mélangeur (12) et fournissant la paroi de séparation d'écoulement (36) dans une deuxième zone longitudinale (34) ou/et **en ce que** le deuxième élément de boîtier fournit une zone de surface de réception de réactif (66) avec une zone de sommet (64) de la paroi de séparation d'écoulement (36) orientée vers l'ouverture d'entrée (24).

4. Mélangeur selon l'une des revendications précédentes, **caractérisé en ce qu'**un axe central d'ouverture d'entrée (L_{E}) de l'ouverture d'entrée (24) et un axe central d'ouverture de sortie (L_{A}) de l'ouverture de sortie (38) sont disposés de manière non parallèle et non coaxiale.

5. Mélangeur selon la revendication 4, **caractérisé en ce que** l'axe central d'ouverture d'entrée (L_{E}) et l'axe central d'ouverture de sortie (L_{A}) de l'ouverture de sortie (38) se croisent ou/et sont disposés l'un par rapport à l'autre selon un angle dans la plage de 80° à 100°, de préférence environ 90°.

6. Mélangeur selon l'une des revendications précédentes, **caractérisé en ce que** le premier canal d'écoulement (48) et le deuxième canal d'écoulement (50) sont réalisés de manière sensiblement symétrique par rapport à un plan médian (E) passant par un axe central d'ouverture d'entrée (L_{E}) de l'ouverture d'entrée (24) et un axe central d'ouverture de sortie (L_{A}) de l'ouverture de sortie (38).

7. Mélangeur selon la revendication 6, **caractérisé en ce que** le premier élément de boîtier (12) et le deuxième élément de boîtier (14) sont conçus de manière sensiblement symétrique par rapport au plan médian (E) défini par l'axe central d'ouverture d'entrée (L_{E}) et l'axe central d'ouverture de sortie (L_{A}).

8. Mélangeur selon l'une des revendications précédentes, **caractérisé en ce que** la paroi extérieure (16), avec la première zone de renflement (42), la deuxième zone de renflement (44) et la zone de renfoncement (46), fournit un contour circonférentiel en forme de coeur du boîtier de mélangeur (40).

9. Mélangeur selon l'une des revendications précédentes, **caractérisé en ce qu'**une formation de montage d'injecteur (56) est prévue dans la zone de l'ouverture d'entrée (24), ou/et **en ce qu'**une formation de montage de capteur (60) est prévue dans la zone de l'ouverture d'entrée (24).

10. Mélangeur selon l'une des revendications précédentes, **caractérisé en ce qu'**il est prévu sur la paroi de séparation d'écoulement (36) au moins un élément d'agrandissement de surface supérieure (64) faisant saillie avant ou dans le premier canal d'écoulement (48) et/ou au moins un élément d'agrandissement de surface (68) faisant saillie avant ou dans le deuxième canal d'écoulement (50).

11. Mélangeur selon l'une des revendications précédentes, **caractérisé en ce que** la paroi de séparation d'écoulement (36) est réalisée au moins par zones à la manière d'une vague.

12. Système d'échappement pour un moteur à combustion interne, comprenant un mélangeur (10) selon l'une des revendications précédentes, ainsi qu'un injecteur (A, B, C) porté par le boîtier de mélangeur (40) ou en amont du boîtier de mélangeur (40).

13. Système d'échappement selon la revendication 12, **caractérisé en ce que** l'injecteur (A, B, C) est supporté sur le boîtier de mélangeur (40) ou en amont du boîtier de mélangeur (40) de telle sorte qu'un jet de réactif émis par celui-ci est dirigé vers une zone de surface de réception de réactif (66) de la paroi de séparation d'écoulement (36).
